# EUROPÄISCHE PATENTSCHRIFT

(11) **EP 2 041 495 B1**
(45) Veröffentlichungstag und Bekanntmachung des Hinweises auf die Patenterteilung: **10.08.2016**
(21) Anmeldenummer: 07765415.0
(22) Anmeldetag: 14.06.2007
(51) Int. Cl.: F24C 7/08, H01H 36/00, G05B 19/10, H01H 27/00

(54) **BEDIENEINHEIT ZUR ANZEIGE UND/ODER EINSTELLUNG VON BETRIEBSPARAMETERWERTEN VON ZUMINDEST EINEM HAUSGERÄT**
OPERATING UNIT FOR DISPLAYING AND/OR ADJUSTING OPERATING PARAMETERS OF AT LEAST ONE DOMESTIC APPLIANCE
UNITE DE COMMANDE DESTINEE A AFFICHER ET/OU A REGLER DES VALEURS DE PARAMETRES DE FONCTIONNEMENT D'AU MOINS UN APPAREIL ELECTROMENAGER

(30) Priorität: 03.07.2006 DE 102006030550
(43) Veröffentlichungstag der Anmeldung: 01.04.2009
(73) Patentinhaber: BSH Hausgeräte GmbH, 81739 München (DE)
(72) Erfinder: BECK, Richard, 83278 Traunstein (DE); BEIFUSS,Wolfgang, 83339 Chieming (DE); HAS, Uwe, 84579 Unterneukirchen (DE); HUBER, Johann, 83334 Inzell (DE); MAIER, Thomas, 84518 Garching a.d. Alz (DE); SCHMITT, Christoph, 83349 Palling (DE); VETTERL, Peter, 83355 Grabenstätt (DE); ZERASCHI, Monika, 83301 Traunreut (DE)
(86) Internationale Anmeldenummer: PCT/EP2007/055883
(87) Internationale Veröffentlichungsnummer: WO 2008/003572

(56) Entgegenhaltungen:
- EP-A- 0 565 976
- EP-A- 0 802 465
- EP-A- 1 107 647
- EP-A- 1 349 281
- WO-A-02/086219
- DE-A1- 10 026 457
- DE-A1- 19 849 075
- DE-A1-102004 021 019
- DE-U1- 9 308 473
- GB-A- 2 318 650
- US-A- 5 196 830

## Beschreibung

Die Erfindung betrifft eine Bedieneinheit zur Anzeige und/oder Einstellung von Werten von zumindest einem Betriebsparameter von zumindest einem Hausgerät, welche Bedieneinheit als eine von einem Hausgerät separierbare Einheit ausgebildet ist und an zumindest zwei Hausgeräten anbringbar ist.

Aus der EP 1 349 281 A2 ist eine Bedienvorrichtung für ein Elektrogerät bekannt, welche abnehmbar an einem Hausgerät anbringbar ist. Die Bedienvorrichtung kann zur Bedienung verschiedenster Funktionseinheiten eines Elektrogeräts oder auch eventuell anderer Elektrogeräte ausgebildet sein. Beispielsweise kann vorgesehen sein, dass die Bedieneinheit sowohl für ein Kochfeld als auch für einen Backofen oder eine Waschmaschine zu benutzen ist. Die Bedieneinheit kann an dem jeweiligen Elektrogerät angebracht werden und die Kommunikation mit diesem Elektrogerät aufnehmen, um dann ausschließlich dessen Steuerung zu übernehmen. Die Steuerung der Elektrogeräte ist daher sehr aufwendig und lediglich individualisiert möglich.

Aus der EP 1 349 281 A2 ist eine Bedienvorrichtung für ein Elektrogerät bekannt, wobei hier eine Bedieneinheit mit einem Drehknebel vorgesehen ist. Der Drehknebel weist einen Übertrager zur Übertragung von elektromagnetischer Energie auf, sodass eine Energieversorgung der Bedieneinheit ermöglicht ist. Die Energieversorgung kann getaktet über-tragen werden.

Darüber hinaus ist aus der EP 1 107 647 A2 eine Steuerung für ein Elektrogerät bekannt, wobei hier eine Steuereinheit geschaltet werden kann und dazu als Schalter ein Reed-Kontakt vorgesehen ist. Unmittelbar mit dem Abnehmen des Bedienelements von dem Elektrogerät wird die Signalübertragung und die Energieübertragung sofort unterbrochen.

Darüber hinaus ist aus der EP 0 802 465 A2 ein elektrisches Hausgerät bekannt, welches einen abnehmbaren Steuerrechner aufweist. Über eine Busleitung, an welcher mehrere Hausgeräte angeordnet sind, können die Hausgeräte über den Steuerrechner gesteuert werden.

Die DE 198 49 075 A1 offenbart eine Steuerung für ein Elektrogerät, welche eine von dem Elektrogerät separierbare Steuereinheit aufweist, die drahtlos signalübertragend mit dem Elektrogerät verbunden ist und im Wesentlichen den Steuer- und Regelungsteil für das Elektrogerät enthält. Es wird also eine von dem Elektrogerät lösbare beziehungsweise getrennte Bedien- und Steuereinheit bereitgestellt. Diese kann über eine Batterie oder eine induktive Energieversorgung mit Strom versorgt werden und kann für eine komplette Gerätefamilie eingesetzt werden.

Daher ist es Aufgabe der vorliegenden Erfindung, eine Bedieneinheit zu schaffen, mit welcher die Anzeige und/oder Einstellung von Betriebsparametern von zumindest einem Hausgerät flexibler möglich ist.

Diese Aufgabe wird durch eine Bedieneinheit, welche die Merkmale nach Patentanspruch 1 aufweist, gelöst.

Eine erfndungsgemäße Bedieneinheit ist zur Anzeige und/oder Einstellung und/oder Überwachung von zumindest einem Betriebsparameter zumindest eines Hausgeräts ausgebildet, wobei die Bedieneinheit an zumindest zwei Hausgeräte anbringbar ist. Die Bedieneinheit ist als eine von einem Hausgerät separierbare Einheit ausgebildet, wodurch sie daran anbringbar und auch wieder lösbar ist. Die Anzeige und/oder Einstellung von Betriebsparameterwerten eines Hausgeräts ist unabhängig davon durchführbar, an welchem der zumindest zwei Hausgeräte die Bedieneinheit angeordnet ist. So kann beispielsweise ermöglicht werden, dass die Bedieneinheit an einem ersten Hausgerät angeordnet ist, und eine Anzeige und/oder Einstellung von Betriebsparametern des zweiten Hausgeräts, an dem die Bedieneinheit momentan nicht angeordnet ist, durchführbar ist. Durch diese Ausgestaltung der Bedieneinheit kann die Steuerung und Regelung von mehreren Hausgeräten flexibler durchgeführt werden, wobei dies positionsunabhängig und somit unabhängig vom Anbringungsort der Bedieneinheit erfolgen kann.

Es ist vorgesehen, dass die Energieversorgung nach einer vorgegebenen Zeitdauer nach dem Abnehmen der Bedieneinheit von einem Hausgerät unterbrechbar ist.

In einer Ausführungsform, die nicht zur vorliegenden Erfindung gehört kann vorgesehen sein, dass die mit der Bedieneinheit steuerbaren Hausgeräte durch einen Kommunikationsbus miteinander verbunden sind. Dieser Kommunikationsbus kann drahtlos oder drahtgebunden oder zumindest teilweise drahtlos oder zumindest teilweise drahtgebunden ausgeführt sein. Durch eine derartige Ausführung kann es auch ermöglicht werden, dass mit der Bedieneinheit steuerbare Hausgeräte, welche in verschiedenen Räumen oder in einem Raum relativ weit voneinander und gegebenenfalls nicht gleichzeitig durch eine Person überwachbare Hausgeräte zuverlässig und aufwandsarm betrieben werden können. Auch dem Sicherheitsaspekt kann dadurch in vollem Umfang genüge getan werden.

Es kann vorgesehen sein, dass die Energieversorgung der Bedieneinheit und/oder die Informationsübertragung zwischen der Betriebseinheit und dem Hausgerät, an dem die Bedieneinheit jeweils angeordnet ist, drahtlos durchführbar sind. Insbesondere kann vorgesehen sein, dass die Bedieneinheit zur induktiven bzw. transformatorischen Energieversorgung ausgebildet ist. Es kann vorgesehen sein, dass in den mit der Bedieneinheit steuerbaren Hausgeräten eine Primärseite eines Transformators zur Energieversorgung angeordnet ist, und in der Bedieneinheit eine Sekundärseite dieses Transformators integriert ist. Beim Aufsetzen der Bedieneinheit auf das jeweilige Hausgerät kann dann die Energieversorgung der Bedieneinheit geschaltet werden. Es kann dabei vorgesehen sein, dass ein Reed-Schalter, insbesondere ein Reed-Relais vorgesehen ist, mittels welchem diese Schaltung der Energieversorgung durchführbar ist. Als vorteilhaft erweist es sich, wenn die Befestigung der Bedieneinheit an einem Hausgerät durch zumindest einen Magneten erfolgt, welcher so positioniert ist, dass durch dessen Magnetfeld auch der Reed-Schalter betätigbar ist. Wird die Bedieneinheit von einem Hausgerät separiert und somit von dem Hausgerät abgenommen, so kann durch diese Ausführung ein Standby-Energieverbrauch der Bedieneinheit verhindert werden. Die Bedieneinheit kann dadurch energieoptimiert in ihrer Betriebsweise ausgeführt werden.

In bevorzugter Weise wird die Energieversorgung über ein separiertes Schaltnetzteil durchgeführt. Die Trafohälften berühren sich daher bei dieser Ausführung nicht. Ein Luftspalt kann zwischen den Topfkernen ausgebildet sein. Es kann vorgesehen sein, dass der induktive Energieaustausch zwischen der Primärseite und der Sekundärseite und die Informationsübertragung über den Belastungszustand dieser transformatorischen Energieversorgungsvorrichtung getrennt erfolgt. Die Information über den Belastungszustand ist über einen bevorzugt drahtlos ausgebildeten Kommunikationsweg übertragbar. Die Rückführung der Information über den Belastungszustand erfolgt bevorzugt über einen optischen Datenbus, insbesondere über eine IR(Infrarot)-Datenübertragung.

Darüber hinaus ist neben dieser Ausführung der Energieversorgungsvorrichtung auch bevorzugt die eigentliche Informationsübertragung zwischen der Bedieneinheit und dem jeweiligen Hausgerät, an dem die Bedieneinheit gegenwärtig angeordnet ist, durch einen drahtlos ausgebildeten optischen Datenbus realisiert. Über diesen optischen Datenbus werden dann die Signale zur Steuerung und somit gegebenenfalls zur Änderung von Betriebsparameterwerten von der Bedieneinheit an das Hausgerät übertragen. In entgegen gesetzter Richtung werden die Rückmeldung über diese Einstellungen und die dadurch erzielten Effekte von dem Hausgerät an die Bedieneinheit übertragen und dort angezeigt.

Bei der Energieversorgungsvorrichtung kann vorgesehen sein, dass der Transformator der Hochfrequenz-Energieübertragung mit unterschiedlich großen Hälfen ausgebildet ist. Bevorzugt ist die in der Bedieneinheit angeordnete Hälfte kleiner ausgebildet als die in dem Hausgerät angeordnete Hälfte. Es kann auch vorgesehen sein, dass der Transformator mit speziell geformten, insbesondere geschliffenen, Polschuhen ausgebildet ist. Dadurch kann das elektromagnetische Verlustfeld reduziert werden. Die Steuerung des Trafos kann in atypischer Weise ohne eine Rückführung von Informationen von der Sekundärseite an die Primärseite erfolgen. Bevorzugt sind die Topfkerne der transformatorischen Energieversorgungsvorrichtung in Formgebung und Anordnung so dimensioniert, dass das Verlustfeld möglichst klein gehalten werden kann. Beispielsweise können die Topfkerne an den einander zugewandten Seiten abgeschrägt sein. Auch die in den Topfkernen enthaltenen Kupferfüllungen können im Querschnitt an der oberen Seite schräg ausgeformt sein.

Es kann vorgesehen sein, dass die Bedieneinheit zumindest ein Display und zumindest ein Bedienelement zur Einstellung und/oder Überwachung von Betriebsparametern der mit der Bedieneinheit steuerbaren Hausgeräte aufweist. Es kann vorgesehen sein, dass die Bedieneinheit zumindest einen manuell betätigbaren Schalter aufweist. Dieser kann als Dreh-/Drückschalter realisiert sein. Die Bedieneinheit kann auch zumindest ein Touchpad oder Touchscreenfeld aufweisen. Ebenso kann auch ein Bedienelement gemäß einem Joystick oder dergleichen vorgesehen sein. Diese Bedienelemente können an der Bedieneinheit so angeordnet und verteilt sein, dass sie an verschiedenen Oberseiten dieser angeordnet sind. Abhängig von der Formgebung und der Positionierung der Bedieneinheit können dann die Bedienelemente im Hinblick auf eine sichere und einfache Zugänglichkeit und Bedienbarkeit bedarfsabhängig in optimaler Weise angeordnet werden. Die Bedieneinheit kann in diesem Zusammenhang somit in vielfältiger Weise ausgebildet und bereitgestellt werden.

Jedes der mit der Bedieneinheit steuerbaren Hausgeräte umfasst bevorzugt zumindest einen Positionierbereich, an welchem die Bedieneinheit lösbar anbringbar ist. In diesem Positionierbereich sind bevorzugt auch die für die transformatorische Energieversorgung der Bedieneinheit erforderlichen Komponenten in dem Hausgerät angeordnet. Durch diese Positionierbereiche kann eine falsche Aufstellung der Bedieneinheit bzw. Anordnung dieser an einem Hausgerät verhindert werden. Für einen Nutzer ist es daher leicht erkennbar, wo er die Bedieneinheit anbringen kann, wodurch ein zielsicheres und schnelles Anbringen möglich ist, wobei zusätzlich dadurch auch die sichere Energieversorgung und die sichere Kommunikation zwischen der Bedieneinheit und den Hausgeräten gewährleistet ist.

Es kann auch vorgesehen sein, dass die Informationsübertragung nach einer vorgebbaren Zeitdauer nach dem Abnehmen der Bedieneinheit von einem Hausgerät unterbrechbar ist. In diesem Zusammenhang kann gewährleistet werden, dass ein Informationsaustausch noch abgeschlossen werden kann, wenn die Bedieneinheit bereits abgenommen ist. Der sichere Betrieb der Hausgeräte wird dadurch zusätzlich begünstigt.

Zur weiteren Verbesserung der Sicherheit und der Information an einen Nutzer kann vorgesehen sein, dass vor der Unterbrechung der Energieversorgung und/oder vor der Unterbrechung der Informationsübertragung nach dem Abnehmen der Bedieneinheit ein optisches und/oder ein akustisches Warnsignal erzeugbar sind. Ein Warnsignal kann auch dann ausgegeben werden, wenn die Bedieneinheit nicht vollständig bewusst abgenommen wird, sondern unbewusst nur etwa aus seiner ordnungsgemäßen vorgesehenen Position an einem Hausgerät verschoben wird und die Energieversorgung nur noch suboptimal gewährleistet ist. Ein Signal kann beispielsweise ein Pfeifton oder dergleichen sein. Anstatt oder zusätzlich kann auch ein Leuchtelement beispielsweise ein rotes Blinklicht erzeugen. Ebenso kann auch vorgesehen sein, dass ein Sprachsignal als akustisches Signal ausgegeben wird.

Es kann auch vorgesehen sein, dass die Bedieneinheit eine Schnittstelle zum Einspielen von Software für die Bedieneinheit und/oder ein mit der Bedieneinheit zu steuerndes Hausgerät umfasst. Damit kann die schnelle und sichere Aktualisierung von Software ermöglicht werden. Neue Steuerungsalgorithmen und dergleichen für die Bedieneinheit und/oder eines der Hausgeräte, welche mit der Bedieneinheit bedienbar sind, können dadurch einfach und schnell eingespielt werden.

Bevorzugt kann vorgesehen sein, dass die Software in zwei funktionale Einheiten aufgeteilt ist. Eine Softwareeinheit ist zur Bedienung der Bedieneinheit und für das Display vorgesehen. Ein zweiter Softwareteil ist für die Steuerung und/oder Regelung des Hausgeräts vorgesehen. Die mittels der Bedieneinheit erzeugbaren Steuersignale zur Einstellung eines Betriebsparameters eines Hausgeräts sind bevorzugt an eine Steuereinheit des Hausgeräts zur weiteren Verarbeitung und Ausführung der Betriebsparametereinstellung übertragbar. Die Steuerung und/oder Regelung wird dann bevorzugt vollständig und alleinig in der Elektronik des Hausgeräts durchgeführt. Die Bedienung und die Anzeige von Informationen an einen Nutzer erfolgt bevorzugt im Wesentlichen durch die Bedieneinheit.

In vorteilhafter Weise ist in dem Hausgerät eine Minimalanzeige, insbesondere eine Restwärmeanzeige, angeordnet. Es kann vorgesehen sein, dass diesbezüglich lediglich ein Leuchtelement am Hausgerät angeordnet ist. Des Weiteren kann vorgesehen sein, dass an dem Hausgerät ein Hauptschalter angeordnet ist, mit dem die grundlegende Einund Ausschaltung der Energieversorgungskomponenten und der Informationsübertragungskomponenten des Hausgeräts durchführbar ist.

Es kann vorgesehen sein, dass das Abnehmen der Bedieneinheit von einem Hausgerät unmittelbar das Abschalten dieses Hauptschalters und dadurch die Unterbrechung der Energieversorgung und/oder die Informationsübertragung bewirkt. Es kann auch vorgesehen sein, dass das Abschalten des Hauptschalters erst nach einer vorgebbaren Zeitdauer nach dem Abnehmen der Bedieneinheit von einem Hausgerät erfolgt.

Insbesondere durch diese Ausgestaltung der Softwareteile und somit der Individualisierung verschiedenster Bedienbarkeiten und Steuerbarkeiten von Hausgeräten kann in relativ aufwandsarmer Weise eine Mehrzahl von Gerätevarianten erzeugt werden, denen allesamt ein gleiches Hausgerät zugrunde gelegt ist, aber denen jeweils unterschiedliche Bedieneinheiten zugeordnet werden.

In bevorzugter Weise ist die Energieversorgung und somit die Komponente Energieversorgung im jeweiligen Hausgerät und die Komponente Energieversorgung für die Bedieneinheit in der Bedieneinheit so angeordnet, dass in einem bestimmten Abstand zu diesen Komponenten keine Metallteile angeordnet sind. Bevorzugt ist dabei vorgesehen, dass im Abstand von etwa 2 cm zu diesen Komponenten der Energieversorgung und insbesondere zu dem Transformator bei einer induktiven Energieversorgung kein Metall angeordnet ist, wodurch die Wirkung als Kurzschlusswicklung eines derartigen Metallteils verhindert werden kann. Wird dennoch innerhalb eines derartigen Abstands die Anordnung eines Metalls bzw. eines Blechteils unvermeidbar, so kann vorgesehen sein, dass dieses Metallteil keinen geschlossenen Ring bildet. Ist auch die Vermeidung eines geschlossenen Rings nicht möglich, so ist vorteilhafterweise vorgesehen, dass dieser Ring geschlitzt ausgebildet ist.

Zur Reduktion von elektromagnetischen Strahlen kann vorgesehen sein, dass elektrisch leitfähige Kunststoffe oder elektrisch leitfähig beschichtete Gläser für das Gehäuse der Bedieneinheit und/oder die Abdeckung des Displays der Bedieneinheit vorgesehen sind. Es kann in diesem Zusammenhang beispielsweise ein Glas vorgesehen sein, welches mit Zinnoxyd und/oder Wolframoxyd transparent beschichtet ausgebildet ist.

Die Befestigung der Bedieneinheit an einem Hausgerät erfolgt bevorzugt über einen, insbesondere zwei Magnete, durch welche bevorzugt ein Reed-Relais betätigbar ist. Das Reed-Relais wird über eine Feldbrücke mit Magnetfeld versorgt, so dass beide Magnete zur Befestigung aufliegen müssen, wodurch auch eine Prüfung der korrekten Position der Bedieneinheit durchgeführt werden kann.

Es kann auch vorgesehen sein, dass die Bedieneinheit über eine Koppelstation an ein Hausgerät angebunden werden kann, so dass die Bedieneinheit nicht mehr auf dem Hausgerät aufliegen muss, sondern über ein Kabel angeschlossen ist, und neben dem Hausgerät positionierbar ist.

Bevorzugt umfasst die Bedieneinheit einen Sensor, insbesondere einen IR-Sensor, welcher zur Detektion von eine Temperatur eines auf einem Kochfeld eines Hausgeräts positionierten Zubereitungsgefäßes charakterisierenden Messwerten ausgebildet ist. Bevorzugt ist der Sensor, insbesondere der IR-Sensor, an den dem Zubereitungsgefäß zugewandten Seite der Bedieneinheit eingebaut, so dass die vom Zubereitungsgefäß und insbesondere von dessen Seitenwand abgestrahlte Wärmestrahlung detektierbar ist. Durch eine derartige Ausgestaltung kann die Bedieneinheit nicht nur zur Anzeige und/oder Einstellung verwendet werden, sondern auch als Detektoreinheit für darüber hinausgehende Vorgänge eingesetzt werden. Die Multifunktionalität der Bedieneinheit ist dadurch erhöht.

Es kann auch vorgesehen sein, dass die Bedieneinheit eine Warneinrichtung aufweist, welche zur Detektion von Rauch und/oder Feuer ausgebildet ist. Die Bedieneinheit kann diesbezüglich einen Rauchmelder und/oder einen Feuermelder und/oder einen Gasmelder aufweisen, wodurch die Bedieneinheit auch als Sicherheitsvorrichtung ausgebildet ist. Zusätzlich oder anstatt kann dann auch vorgesehen sein, dass die Bedieneinheit selbständig die Betriebsbedingungen der momentan zu steuernden Hausgeräte oder des momentan vorzugsweise zu steuernden Hausgeräts so eingestellt werden, dass kein Sicherheitsrisiko im weiteren Betrieb des oder der Hausgeräte auftritt.

Es kann auch vorgesehen sein, dass die Anzeige der Bedieneinheit erst dann aktiviert wird, wenn mittels der Erfassungsvorrichtung eine Person erkannt wird, welche sich vor der Bedieneinheit und/oder einem mit der Bedieneinheit steuerbaren Hausgerät befindet.

Es kann auch vorgesehen sein, dass ein Display der Bedieneinheit erst dann hinterleuchtet ist, wenn eine Person in einem vorgebbaren Umfeld zur Bedieneinheit positioniert ist. Auch dies kann bevorzugt mit der Erfassungsvorrichtung erfasst werden. Die Erfassungsvorrichtung kann als Bewegungsmelder ausgebildet sein. Es kann eine Ausführung als Ultraschallsensorik und/oder als IR-Sensorik vorgesehen sein. Es kann auch eine Kamera zur Bildaufnahme vorgesehen sein. Sie kann zur Detektion von Bildern oder auch zur Detektion von IR-Aufnahmen ausgebildet sein. Die Erfassungsvorrichtung kann insbesondere mit ihrer Detektionseinheit bewegbar an der Bedieneinheit angeordnet sein. Besonders bevorzugt kann dabei eine Schwenkvorrichtung sein, welche die Bewegung der Erfassungsvorrichtung in zumindest zwei Raumrichtungen gewährleistet.

Die Bedieneinheit kann des Weiteren eine Organizereinrichtung zur Ein- und Ausgabe von Nachrichten umfassen. Die Nachrichten dieser Organizereinrichtung können dann für Nutzer eines mit der Bedieneinheit steuerbaren Hausgeräts und/oder für Nutzer der Bedieneinheit bereitgestellt werden und abrufbar sein. Die Organizereinrichtung kann zusätzlich oder anstatt dazu auch zum Abruf von Anleitungen für mit einem mit der Bedieneinheit steuerbaren Hausgerät durchführbaren Arbeiten ausgebildet sein. So kann die Organizereinrichtung beispielsweise eine "Notizblattfunktion" ähnlich einem Palmtop aufweisen. So kann dadurch einem Mitnutzer eines Hausgeräts, beispielsweise einem Familienmitglied, welches gegenwärtig nicht erreichbar ist, mitgeteilt werden, dass beispielsweise ein vorbereitetes Essen im Kühlschrank,ist. Kommt das Familienmitglied dann später nach Hause, so kann es diese Nachricht abrufen bzw. bei Aktivierung der Beidieneinheit und/oder eines Hausgeräts wird ihm diese Nachricht automatisch lesbar und/oder akustisch mitgeteilt. Darüber hinaus kann auch das Abrufen eines elektronischen Kochbuchs ebenfalls mit Bildern und der Beschreibung für ein zuzubereitendes Essen angezeigt werden. Über die Sprachausgabe kann auch gewährleistet werden, dass während eines Zubereitungsvorgangs, beispielsweise eines Zubereitens eines Essens, auch Informationen wie das Wenden eines Fleischstückes oder dergleichen mitgeteilt wird. Für diese Informationsausgabe können mit einer Mehrzahl an Sensoren detektierte Informationen herangezogen und ausgewertet werden. Des Weiteren kann auch beispielsweise eine Information "Rühren" für das Zubereiten von Eintöpfen oder Suppen oder dergleichen während eines Zubereitungsvorgangs angegeben werden. Die bestmögliche Zubereitung eines Gutes kann dadurch erreicht werden. Bevorzugt sind die mit der Bedieneinheit bedienbaren Hausgeräte für Arbeiten in einer Küche ausgebildet. In diesem Zusammenhang können beispielsweise Kochfelder bzw. Kochmulden, Backöfen, Elektroherde, Dunstabzugshauben, Geschirrspüler, Dampfgargeräte, Mikrowellen, Kühlschränke, Gefrierschränke usw. genannt werden. Die genannte Aufzählung ist dabei keinesfalls abschließend zu verstehen und kann in vielerlei Weise durch weitere Hausgeräte ergänzt werden. So kann auch vorgesehen sein, dass in einem Raum einerseits eine Kochmulde und andererseits eine Waschmaschine oder ein Wäschetrockner aufgestellt sind und diese Geräte alle mit einer Bedieneinheit bedienbar sind.

Die Bedieneinheit kann in Formgebung und Größe in vielerlei Hinsicht ausgestaltet sein. Es kann auch vorgesehen sein, dass die Bedieneinheit mehrere miteinander verbundene Komponenten aufweist, von denen zumindest einige relativ zueinander bewegbar sind. So kann vorgesehen sein, dass Komponenten über eine Klapp- oder Schwenkvorrichtung miteinander verbunden sind. Durch diese Ausgestaltung können einzelne Teile, wie beispielsweise Displays oder Eingabefelder zugeklappt oder durch eine Schiebevorrichtung in der Bedieneinheit versenkt werden. Dadurch können diese Komponenten vor Staub oder Schmutz oder sonstigen Verunreinigungen geschützt werden. Auch die Beschädigung durch beispielsweise Verkratzen oder dergleichen kann dadurch verhindert oder zumindest reduziert werden. Nicht zuletzt können dadurch auch Komponenten der Bedieneinheit, welche selten verwendet oder bei der momentanen Bedienung der Bedieneinheit nicht benötigt werden, so angeordnet werden, dass sie nicht störend wirken. Die Bedieneinheit wirkt dadurch stets kompakt und aufgeräumt. Die Übersichtlichkeit bleibt dadurch erhalten.

Ein Ausführungsbeispiel der Erfindung wird nachfolgend anhand schematischer Zeichnungen näher erläutert. Es zeigen:
- Fig. 1: eine perspektivische Darstellung einer erfindungsgemäßen Bedieneinheit zum Bedienen eines Kochfelds;
- Fig. 2: eine schematische Schnittansicht durch eine Bedieneinheit und ein Kochfeld; und
- Fig. 3: eine perspektivische schematische Darstellung eines Ausführungsbeispiels einer erfindungsgemäßen Bedieneinheit.

In den Figuren werden gleiche oder funktionsgleiche Elemente mit den gleichen Bezugszeichen versehen.

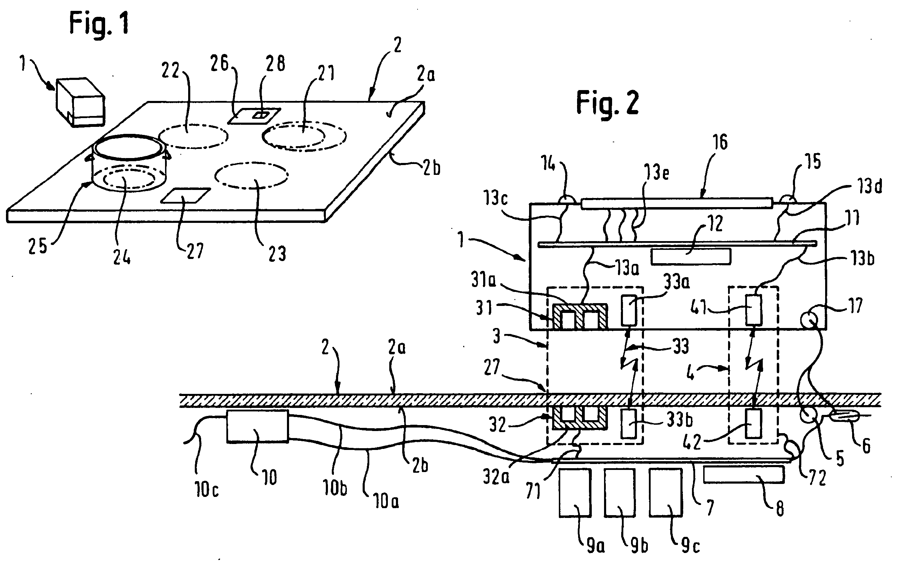

In Fig. 1 ist in perspektivischer Weise eine Bedieneinheit 1 schematisch gezeigt. Die Bedieneinheit 1 ist zum Bedienen von zumindest zwei Hausgeräten ausgebildet. Im Ausführungsbeispiel ist eines der Hausgeräte, welches mit dieser Bedieneinheit 1 steuerbar ist, ein Kochfeld 2. Das Kochfeld 2 umfasst eine Oberseite 2a und eine Unterseite 2b sowie 4 Kochzonen 21, 22, 23 und 24. Auf diesen Kochzonen 21 bis 24 können Zubereitungsgefäße wie ein Kochtopf 25, welcher auf der Kochzone 24 steht, aufgestellt werden. In der gezeigten Ausführung weist das Kochfeld 2 zwei Positionierbereiche 26 und 27 auf, an welchen die Bedieneinheit 1 positionierbar ist. Die Bedieneinheit 1 ist als separates Modul ausgebildet und zur lösbaren Anbringung an dem Kochfeld 2, insbesondere den Positionierbereichen 26 und 27, konzipiert. In der in Fig. 1 gezeigten Ausführung ist die Bedieneinheit 1 als würfelförmiges Element ausgestaltet, wobei diese Formgebung und Ausgestaltung lediglich beispielhaft und keinesfalls einschränkend zu sehen ist.

Im Positionierbereich 26 ist eine Restwärmeanzeigevorrichtung 28 ausgebildet, welche somit bei aufgesetzter Bedieneinheit 1 unterhalb dieser Bedieneinheit 1 angeordnet ist.

Durch die Bedieneinheit 1 kann gewährleistet werden, dass das Kochfeld 2 mittels dieser Bedieneinheit 1 bedienbar ist, wenn diese Bedieneinheit 1 auf dem Positionierbereich 26 oder auf dem Positionierbereich 27 aufgestellt ist. Ist diese Bedieneinheit 1 auf einem dieser Positionierbereiche 26 oder 27 des Kochfeldes 2 aufgestellt ist es darüber hinaus auch möglich, dass ein beliebiges anderes Hausgerät, welches mit dieser Bedieneinheit 1 bedienbar ist, eingestellt und/oder überwacht werden kann. So kann beispielsweise auch vorgesehen sein, dass die Bedieneinheit 1 neben der Bedienbarkeit des Kochfeldes 2 auch zur Bedienung einer Dunstabzugshaube, eines Dampfgargeräts und einer Mikrowelle ausgebildet ist. Die Dunstabzugshaube, das Dampfgargerät und das Mikrowellengerät können mit der Bedieneinheit 1 auch dann bedient werden, wenn diese Bedieneinheit 1 auf dem Positionierbereich 26 oder 27 des Kochfelds 2 angeordnet ist. In entsprechender Weise kann auch das Kochfeld 2 mittels der Bedieneinheit 1 bedient werden, wenn diese Bedieneinheit 1 an einem entsprechenden Positionierbereich der Dunstabzugshaube oder an einem Positionierbereich des Dampfgargerätes oder an einem Positionierbereich des Mikrowellengerätes angeordnet ist. Die Bedienung und somit die Anzeige und/oder Einstellung und/oder Überwachung von Betriebsparametern eines der genannten Hausgeräte durch die Bedieneinheit 1 kann somit unabhängig davon erfolgen, an welchem Hausgerät diese Bedieneinheit 1 angeordnet ist.

Die Hausgeräte sind im Ausführungsbeispiel über einen Kommunikationsbus verbunden. Bevorzugt sind die mit der Bedieneinheit 1 bedienbaren Hausgeräte in einem gemeinsamen Raum aufgestellt. Es kann jedoch auch vorgesehen sein, dass die Hausgeräte in verschiedenen Räumlichkeiten angeordnet sind.

In Fig. 2 ist eine Schnittdarstellung gezeigt, in welcher die Bedieneinheit 1 schematisch dargestellt ist. Wie zu erkennen ist, ist die Bedieneinheit 1 im Bereich des Positionierbereichs 27 angeordnet und oberhalb des Glaskeramik-Kochfelds 2 positioniert. Zur Verdeutlichung der Elemente ist die Bedieneinheit 1 beabstandet zur Oberseite 2a des Kochfelds 2 gezeigt. In der gezeigten Ausführung ist eine transformatorische Energieversorgung durch eine Energieversorgungsvorrichtung 3 gewährleistet. Dazu sind in der Bedieneinheit 1 eine Sekundärseite 31 der Energieversorgungsvorrichtung 3 angeordnet, welche mit einer Primärseite 32, welche an der Unterseite 2b des Kochfeldes 2 angeordnet ist, zur Energieübertragung wechselwirkt. Die Energieversorgung erfolgt im gezeigten Ausführungsbeispiel quasi über ein auseinandergezogenes Schaltnetzteil (Topfkerne 31 a und 32a berühren sich nicht und sind durch einen Luftspalt getrennt), wobei die Rückführung der Information über den Belastungszustand der Energieversorgungsvorrichtung 3 über einen optischen Datenbus 33 erfolgt, wobei dazu eine Komponente 33a in der Bedieneinheit 1 und eine Komponente 33b des optischen Datenbusses 33 an der Unterseite 2b des Kochfeldes 2 angeordnet ist. Dieser optische Datenbus 33 ist zur bidirektionalen IR-Informationsübertragung bzw. Datenübertragung über den Bedeutungszustand der Vorrichtung 3 ausgebildet. Darüber hinaus ist eine drahtlose Informationsübertragungsvorrichtung 4 vorgesehen, welche eine Teilkomponente 41 umfasst, die in der Bedieneinheit 1 angeordnet ist. Diese ist zur Informationsübertragung mit einer zweiten Teileinheit 42, welche an der Unterseite 2b des Kochfeldes 2 angeordnet ist, in Wechselwirkung.

In Fig. 2 sind die im Querschnitt kammförmigen Topfkerne 31a und 32a an ihren vorderen freien Enden jeweils eben ausgebildet. Es kann auch vorgesehen sein, dass diese vorderen freien Enden in der Schnittdarstellung abgeschrägt ausgebildet sind. Die Schrägung der äußeren freien Enden kann dann beispielsweise nach innen zur Topfkernmitte ausgebildet sein.

Wie zu erkennen ist, weist die Sekundärseite 31 der Energieversorgungsvorrichtung 3 eine Signalverbindung 13a zu einem Schaltungsträger 11 der Bedieneinheit 1 auf. An dem Schaltungsträger 11 ist ein Mikroprozessor 12 angeordnet. Des Weiteren ist eine Teileinheit 41 über eine Signalverbindung 13b mit diesem Schaltungsträger 11 verbunden.

Der Mikroprozessor 12 ist zur Verarbeitung der Steuersignale der Bedienung der Bedieneinheit 1 und eines Displays 16 ausgebildet.

Die Bedieneinheit 1 umfasst beispielhaft Bedienelemente 14 und 15 sowie ein Display 16, wobei alle drei Komponenten über Signalverbindungen 13c, 13d und 13e mit dem Schaltungsträger 11 elektrisch verbunden sind. Darüber hinaus umfasst die Bedieneinheit 1 einen Magneten 17, welcher in Wechselwirkung mit einem unterhalb des Kochfelds 2 angeordneten weiteren Magneten 5 zur lösbaren Befestigung der Bedieneinheit 1 auf dem Kochfeld 2 dient. Darüber hinaus ist ein Reed-Relais 6 so an der Unterseite 2b des Kochfeldes 2 angeordnet, dass dieses über ein Magnetfeld, erzeugt durch die Magneten 17 und 5, gehalten wird und darüber hinaus die Energieversorgungsvorrichtung 3 über das Reed-Relais 6 schaltbar ist. Das Reed-Relais 6 wird insbesondere durch den Befestigungsmagneten 17 in der Bedieneinheit 1 betätigt.

Auch unterhalb des Kochfeldes 2 ist ein Schaltungsträger 7 positioniert, an dem ein Mikroprozessor 8 angeordnet ist. Die Primärseite 32 der Energieversorgungsvorrichtung 3 ist über eine Signalverbindung 71 mit diesem Schaltungsträger 7 elektrisch verbunden. Darüber hinaus ist auch das Reed-Relais 6 und die Teileinheit 42 der Informationsübertragungsvorrichtung 4, zweitere über die elektrische Signalverbindung 72, mit dem Schaltungsträger 7 elektrisch verbunden. Die Blöcke 9a, 9b und 9c zeigen schematisch Relais und das Netzteil. Der Mikroprozessor 8 ist zur Verarbeitung der Steuersignale zum Steuern und/oder Regeln der Betriebsparameter des Kochfelds 2 ausgebildet. Durch die Mikroprozessoren 8 und 12 ist im Ausführungsbeispiel auch die funktionale Trennung der Software in zwei Einheiten realisiert.

Des Weiteren ist unterhalb des Kochfeldes 2 ein Hauptschalter 10 angeordnet, wobei der Hauptschalter 10 mit dem Schaltungsträger 7 über eine Signalverbindung 10a und eine Signalverbindung 10b elektrisch verbunden ist. Die Signalverbindung 10a dient zur Energieübertragung, wohingegen die Signalverbindung 10b zur Datenübertragung dient. Des Weiteren ist der Hauptschalter 10 über die Signalverbindung 10c mit der Netzspannung verbunden. Durch den Hauptschalter 10 kann die Daten- und Energieübertragung abgeschaltet werden, insbesondere dann, wenn die Abschaltung beim Abnehmen der Bedieneinheit 1 vom Kochfeld 2 nicht ordnungsgemäß funktioniert.

Über die Informationsübertragungsvorrichtung 4 erfolgt der Signalaustausch zum Anzeigen und/oder Einstellen von Betriebsparametern der mit der Bedieneinheit 1 bedienbaren Hausgeräte.

Im Positionierbereich 26 ist das Kochfeld 2 analog zur gezeigten Ausgestaltung in Fig. 2 im Positionierbereich 27 ausgebildet. Auch in den anderen Hausgeräten, welche mit dieser Bedieneinheit 1 bedienbar sind, sind identische oder im Hinblick auf die Funktion zumindest ähnliche Ausgestaltungen dieser Positionierbereiche ausgebildet.

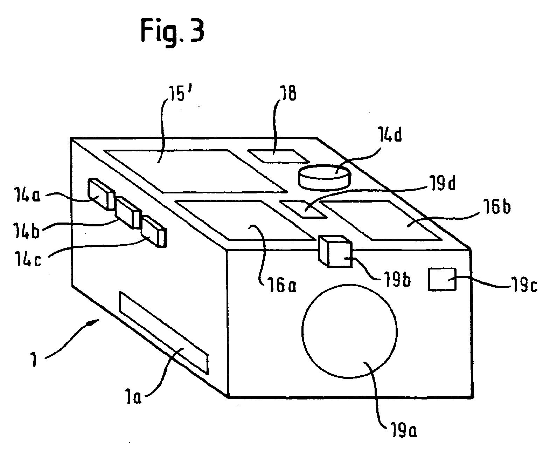

In Fig. 3 ist in einer perspektivischen Darstellung eine beispielhafte Ausführung einer Bedieneinheit 1 gezeigt. Die rechteckförmige Formgebung ist ebenfalls beispielhaft und kann auch zylinderförmig, kugelförmig, halbkugelförmig, scheibenförmig oder dergleichen sein. In der gezeigten Ausführung umfasst die Bedieneinheit 1 an einer Seitenwand 3 manuell betätigbare Bedienelemente in Form von Drucktasten 14a, 14b und 14c. Des Weiteren ist an dieser Seite der Bedieneinheit 1 eine Schnittstelle 1a ausgebildet, welche das Einspielen von Software-Updates oder dergleichen ermöglicht.

An einer Oberseite umfasst die Bedieneinheit 1 ein Touchscreenfeld 15', welches die Eingabe von neuen Parameterwerten oder dergleichen ermöglicht. Auf diesem Touchscreenfeld 15' können auch Ikons zur Symboldarstellung von Bedienmöglichkeiten vorgesehen sein. Des Weiteren ist an dieser Oberseite ein ersten Display 16a und ein zweites Display 16b ausgebildet. Das erste Display 16a ist zur Anzeige von Werten eines oder mehrerer Betriebsparameter des mit dem durch die Bedieneinheit 1 bedienbaren Hausgeräts ausgebildet. Das zweite Display 16b dient im Ausführungsbeispiel zur Anzeige von gespeicherten Nachrichten für einen weiteren Nutzer der Bedieneinheit 1 und/oder eines der Hausgeräte. Die Bedieneinheit 1 dient in diesem Zusammenhang somit auch als Messageboard.

Darüber hinaus können über dieses Display 16b auch ein elektronisches Kochbuch und dergleichen abgerufen und angezeigt werden.

Darüber hinaus ist an dieser Oberseite der Bedieneinheit 1 auch ein Dreh-/Drückbedienelement 14d angeordnet. Auch dies ermöglicht die schnelle und einfache Einstellung von Betriebsparametern und/oder den Abruf von mit dem Display 16b anzeigbaren Informationen. Die Auswahl und die Ansteuerung dieser Informationen kann durch dieses Dreh-/Drückbedienelement 14d besonders schnell und zielführend ermöglicht werden.

Darüber hinaus ist die Bedieneinheit 1 in der gezeigten Ausführung zur Spracheingabe und zur Sprachausgabe ausgebildet. Dazu umfasst die Bedieneinheit 1 an der Oberseite eine Einrichtung 18, durch welche die Detektion der Sprachsignale eines Nutzers bzw. einer Person erfasst werden können und andererseits die von der Bedieneinheit 1 erzeugten akustischen Signale ausgegeben werden.

Des Weiteren umfasst die Bedieneinheit 1 einen IR-Sensor 19a, dessen Detektionsbereich an einer Vorderseite der Bedieneinheit 1 angeordnet ist. Der IR-Sensor 19a ist zur Detektion von Wärmestrahlung eines Zubereitungsgefäßes, welches auf dem Kochfeld 2 abgestellt ist, ausgebildet.

Im Hinblick auf eine bestmögliche Orientierung der Bedieneinheit 1 zu einem Zubereitungsgefäß 25 kann vorgesehen sein, dass die Positionierbereiche 26 und 27 in ihrer Formgebung so ausgebildet sind, dass die Bedieneinheit 1 mit unterschiedlicher Orientierung dieser Vorderseite, aus der der IR-Sensor 19a sich erstreckt, darin positionierbar ist. So kann beispielsweise bei einer Positionierung der Bedieneinheit 1 im Positionierbereich 27 einerseits eine Orientierung des IR-Sensors 19a in Richtung zu dem Kochtopf 25 ermöglicht werden, andererseits bei entgegengesetzter Platzierung der Bedieneinheit 1 auch eine Orientierung des IR-Sensors 19a in Richtung zur Kochzone 23 erreicht werden. Analoges kann in dem Positionierbereich 26 durchgeführt werden.

Wie aus der Darstellung in Fig. 3 zu erkennen ist, umfasst die Bedieneinheit 1 des Weiteren eine Erfassungsvorrichtung 19b, welche als Ultraschallsensor ausgebildet ist und im Bereich der Vorderseite und der Oberseite an der Bedieneinheit 1 ausgebildet ist. Die Erfassungsvorrichtung 19b ist bevorzugt in alle drei Raumrichtungen schwenkbar, so dass ein möglichst großer Erfassungsbereich auch bei unterschiedlicher Aufstellung der Bedieneinheit 1 gewährleistet werden kann. Eine in nahezu allen Fällen bestmögliche Erfassung des Umfeldes und insbesondere von Personen, welche sich im Umfeld der Bedieneinheit 1 und/oder der im selben Raum aufgestellten Hausgeräte befinden, kann dadurch erreicht werden. Die gezeigte Ausführung der Bedieneinheit 1 ist ebenfalls beispielhaft und es können auch an der der Vorderseite gegenüberliegenden Rückseite als auch an der mit den Drucktasten 14a bis 14c versehenen Seite gegenüberliegenden Seitenwand weitere Bedienelemente und/oder Anzeigeflächen ausgebildet sein. Darüber hinaus kann vorgesehen sein, dass einige der gezeigten Komponenten bewegbar an der Bedieneinheit 1 angeordnet sind. So kann beispielsweise die Erfassungsvorrichtung 19b versenkbar in der Bedieneinheit 1 angeordnet sein. Ebenso kann vorgesehen sein, dass beispielsweise das Display 16b in einem ausklappbaren Teilelement der Bedieneinheit 1 integriert ist. Bei Nichtverwendung dieses Displays 16b kann dieses Teilelement zugeklappt werden, wodurch das Display 16b vor Beschädigung und Schmutz geschützt ist. Ein Abdeckmechanismus bzw. ein Klappmechanismus kann auch so ausgebildet sein, dass beispielsweise die gesamte Oberseite der Bedieneinheit 1 durch einen solchen Deckel abdeckbar ist. Darüber hinaus können auch die Displays 16a und 16b vertieft angeordnet sein, wodurch die Anzeige verbessert werden kann. Insbesondere bei einfallendem Sonnenlicht oder dergleichen kann dann auch stets die gute Ablesbarkeit gewährleistet werden. An der Vorderseite ist des Weiteren eine Warneinrichtung 19c angeordnet, welche als Rauchmelder und Feuermelder ausgebildet ist. Eine Restwärmeanzeige 19d kann auf dem Display 16a erfolgen, welche beispielsweise eine rot leuchtende Leuchteinheit sein kann.

## Patentansprüche

1. Bedieneinheit zur Bedienung von zumindest einem Hausgerät, welche als eine von einem Hausgerät (2) separierbare Einheit ausgebildet ist und zumindest an zwei verschiedenen Hausgeräten anbringbar ist, wobei die Einstellung und/oder Überwachung von Betriebsparametern eines Hausgeräts (2) unabhängig davon durchführbar ist, an welchem Hausgerät (2) die Bedieneinheit (1) angeordnet ist, sodass ermöglicht ist, dass die Bedieneinheit an einem ersten Hausgerät angeordnet ist, und eine Anzeige und/oder Einstellung von Betriebsparametern des zweiten Hausgeräts (2), an dem die Bedieneinheit momentan nicht angeordnet ist, durchführbar ist, **dadurch gekennzeichnet, dass** die Energieversorgung der Bedieneinheit (1) durch eine Energieversorgungsvorrichtung (3) mittels eines Schalters (6) geschaltet wird und die Energieversorgung der Bedieneinheit (1) nach einer zum Abschließen eines Informationsaustausches vorgebbaren Zeitdauer nach dem Abnehmen der Bedieneinheit (1) von einem Hausgerät (2) unterbrochen wird.

2. Bedieneinheit nach Anspruch 1, **dadurch gekennzeichnet, dass** die Energieversorgung der Bedieneinheit (1) und/oder die Informationsübertragung zwischen der Bedieneinheit (1) und dem Hausgerät (2) an dem die Bedieneinheit (1) angeordnet ist, drahtlos durchgeführt wird.

3. Bedieneinheit nach Anspruch 1 oder 2, **dadurch gekennzeichnet, dass** die Bedieneinheit (1) zur induktiven Energieversorgung ausgebildet ist.

4. Bedieneinheit nach einem der vorhergehenden Ansprüche, **dadurch gekennzeichnet, dass** die Energieversorgung der Bedieneinheit (1) durch eine Energieversorgungsvorrichtung (3) mittels eines Reed-Schalters (6) geschaltet wird.

5. Bedieneinheit nach Anspruch 4, **dadurch gekennzeichnet, dass** der Reed-Schalter (6) durch zumindest einen Magneten (17) betätigt wird, welcher zur lösbaren Befestigung der Bedieneinheit (1) an einem Hausgerät (2) ausgebildet ist.

6. Bedieneinheit nach einem der vorhergehenden Ansprüche, **dadurch gekennzeichnet, dass** zur Informationsübertragung zwischen der Bedieneinheit (1) und dem Hausgerät (2), an dem die Bedieneinheit (1) angeordnet ist, zumindest eine optische Übertragungsvorrichtung (4) ausgebildet ist.

7. Bedieneinheit nach einem der vorhergehenden Ansprüche, **dadurch gekennzeichnet, dass** die Bedieneinheit (1) zumindest ein Display (16a, 16b) und zumindest ein Bedienelement (14; 14a, 14b, 14c, 14d, 15'; 15) zur Einstellung und/oder Überwachung von Betriebsparametern der mit der Bedieneinheit (1) bedienbaren Hausgeräte (2) aufweist.

8. Bedieneinheit nach einem der vorhergehenden Ansprüche, **dadurch gekennzeichnet, dass** jedes Hausgerät (2) zumindest einen Positionierbereich (26, 27) aufweist, an welchem die Bedieneinheit (1) lösbar positionierbar ist.

9. Bedieneinheit nach einem der vorhergehenden Ansprüche 1 bis 8, **dadurch gekennzeichnet, dass** die Informationsübertragung nach einer vorgebbaren Zeitdauer nach dem Abnehmen der Bedieneinheit (1) von einem Hausgerät (2) unterbrochen wird.

10. Bedieneinheit nach Anspruch 9, **dadurch gekennzeichnet, dass** vor der Unterbrechung der Informationsübertragung ein optisches und/oder ein akustisches Warnsignal erzeugt wird.

11. Bedieneinheit nach einem der vorhergehenden Ansprüche, **dadurch gekennzeichnet, dass** vor der Unterbrechung der Enerergieversorgung ein optisches und/oder akustisches Warnsignal erzeugt wird.

12. Bedieneinheit nach einem der vorhergehenden Ansprüche, **gekennzeichnet durch** eine Schnittstelle (1 a) zum Einspielen von Software für die Bedieneinheit (1) und/oder ein Hausgerät (2).

13. Bedieneinheit nach einem der vorhergehenden Ansprüche, **gekennzeichnet durch** einen Sensor, insbesondere einen IR-Sensor (19a), welcher zur Detektion von eine Temperatur eines an einem Hausgerät (2) positionierten Objekts charakterisierenden Messwerten, insbesondere eines auf einem Kochfeld (2) positionierten Zubereitungsgefäßes (25), ausgebildet ist.

14. Bedieneinheit nach einem der vorhergehenden Ansprüche, **gekennzeichnet durch** eine Warneinrichtung (19c), welche zur Detektion von Rauch und/oder Feuer ausgebildet ist.

15. Bedieneinheit nach einem der vorhergehenden Ansprüche, **gekennzeichnet durch** eine Organizereinrichtung zur Ein- und Ausgabe von Nachrichten, insbesondere persönliche Nachrichten, für Nutzer des Hausgeräts (2) und/oder der Bedieneinheit (1), und/oder zum Abruf von Anleitungen für mit dem Hausgerät (2) durchführbaren Arbeiten.

## Claims

1. Operating unit for operating at least one domestic appliance, which is embodied as a unit which can be separated from a domestic appliance (2) and at least can be attached to two different domestic appliances, wherein the setting and/or monitoring of operating parameters of a domestic appliance (2) can be performed independently of the domestic appliance (2) on which the operating unit (1) is arranged, so that it is possible for the operating unit to be arranged on a first domestic appliance and a display and/or setting of operating parameters of the second domestic appliance (2), on which the operating unit is currently not arranged, can be performed, **characterised in that** the power supply of the operating unit (1) by a power supply apparatus (3) is switched by means of a switch (6) and the power supply of the operating unit (1) is interrupted following a time period predefined for concluding an information exchange after the operating unit (1) has been removed from a domestic appliance (2).

2. Operating unit according to claim 1, **characterised in that** the power supply of the operating unit (1) and/or the information transfer between the operating unit (1) and the domestic appliance (2), on which the operating unit (1) is arranged, is performed wirelessly.

3. Operating unit according to claim 1 or 2, **characterised in that** the operating unit (1) is embodied for inductive power supply.

4. Operating unit according to one of the preceding claims, **characterised in that** the power supply of the operating unit (1) by a power supply apparatus (3) is switched by means of a reed switch (6).

5. Operating unit according to claim 4, **characterised in that** the reed switch (6) is actuated by at least one magnet (17), which is embodied for fastening the operating unit (1) to a domestic appliance (2) in a releasable manner.

6. Operating unit according to one of the preceding claims, **characterised in that** at least one optical transmission apparatus (4) is embodied for information transmission between the operating unit (1) and the domestic appliance (2), on which the operating unit (1) is arranged.

7. Operating unit according to one of the preceding claims, **characterised in that** the operating unit (1) has at least one display (16a, 16b) and at least one operating element (14; 14a, 14b, 14c, 14d, 15'; 15) for setting and/or monitoring operating parameters of the domestic appliance (2) which can be operated by the operating unit (1).

8. Operating unit according to one of the preceding claims, **characterised in that** each domestic appliance (2) has at least one positioning region (26, 27), on which the operating unit (1) can be positioned in a releasable manner.

9. Operating unit according to one of the preceding claims 1 to 8, **characterised in that** the information transfer is interrupted following a predefined time period after the operating unit (1) has been removed from a domestic appliance (2).

10. Operating unit according to claim 9, **characterised in that** before the information transfer is interrupted, an optical and/or an acoustic warning signal is generated.

11. Operating unit according to one of the preceding claims, **characterised in that** before the power supply is interrupted, an optical and/or acoustic warning signal is generated.

12. Operating unit according to one of the preceding claims, **characterised by** an interface (1a) for installing software for the operating unit (1) and/or a domestic appliance (2).

13. Operating unit according to one of the preceding claims, **characterised by** a sensor, in particular an IR sensor (19a), which is embodied to detect measured values characterising a temperature of an object positioned on a domestic appliance (2), in particular a cooking vessel (25) positioned on a hob (2).

14. Operating unit according to one of the preceding claims, **characterised by** a warning facility (19c) which is embodied to detect smoke and/or fire.

15. Operating unit according to one of the preceding claims, **characterised by** an organiser facility for input and output of notifications, in particular personal notifications, for users of the domestic appliance (2) and/or the operating unit (1), and/or for retrieving instructions for tasks which can be performed with the domestic appliance (2).

## Revendications

1. Unité de commande pour la commande d'au moins un appareil électroménager, exécutée sous la forme d'une unité séparable d'un appareil électroménager (2) et pouvant être placée sur au moins deux appareils électroménagers différents, dans laquelle le réglage et/ou la surveillance de paramètres d'exploitation d'un appareil ménager (2) peut s'exécuter indépendamment de l'appareil électroménager (2) sur lequel l'unité de commande (1) est disposée, de sorte à permettre que l'unité de commande soit disposée sur un premier appareil électroménager et un affichage et/ou réglage de paramètres d'exploitation du deuxième appareil électroménager (2) sur lequel l'unité de commande n'est momentanément pas disposée soit réalisable, **caractérisée en ce que** l'alimentation en énergie de l'unité de commande (1) s'opère via un dispositif d'alimentation en énergie (3) au moyen d'un commutateur (6) et l'alimentation en énergie de l'unité de commande (1) est interrompue au terme d'une durée déterminable au préalable pour la réalisation d'un échange d'informations après l'enlèvement de l'unité de commande (1) d'un appareil électroménager (2).

2. Unité de commande selon la revendication 1, **caractérisée en ce que** l'alimentation en énergie de l'unité de commande (1) et/ou la transmission d'informations entre l'unité de commande (1) et l'appareil électroménager (2) sur lequel l'unité de commande (1) est disposée, se réalise sans fil.

3. Unité de commande selon la revendication 1 ou 2, **caractérisée en ce que** l'unité de commande (1) est exécutée en vue d'une alimentation en énergie par induction.

4. Unité de commande selon l'une des revendications précédentes, **caractérisée en ce que** l'alimentation en énergie de l'unité de commande (1) s'opère via une alimentation en énergie de l'unité de commande (1) via un dispositif d'alimentation en énergie (3) au moyen d'un commutateur Reed (6).

5. Unité de commande selon la revendication 4, **caractérisé en ce que** le commutateur Reed (6) est actionné par au moins un aimant (17) exécuté en vue de la fixation amovible de l'unité de commande (1) sur un appareil électroménager (2).

6. Unité de commande selon l'une des revendications précédentes, **caractérisée en ce qu'**au moins un dispositif de transmission optique (4) est exécuté en vue de la transmission d'informations entre l'unité de commande (1) et l'appareil électroménager (2) sur lequel l'unité de commande (1) est disposée.

7. Unité de commande selon l'une des revendications précédentes, **caractérisée en ce que** l'unité de commande (1) présente au moins un écran (16a, 16b) et au moins un élément de commande (14; 14a, 14b, 14c, 14d, 15' ; 15) pour régler et/ou surveiller les paramètres d'exploitation des appareils électroménagers (2) commandables via l'unité de commande (1).

8. Unité de commande selon l'une des revendications précédentes, **caractérisée en ce que** chaque appareil électroménager (2) présente au moins une zone de positionnement (26, 27) sur laquelle l'unité de commande (1) peut être positionnée de manière amovible.

9. Unité de commande selon l'une des revendications précédentes 1 à 8, **caractérisée en ce que** la transmission d'informations s'interrompt après une durée déterminable au préalable suite à l'enlèvement de l'unité de commande (1) d'un appareil électroménager (2).

10. Unité de commande selon la revendication 9, **caractérisée en ce qu'**un signal d'alarme optique et/ou visuel est généré avant l'interruption de la transmission d'informations.

11. Unité de commande selon l'une des revendications précédentes, **caractérisée en ce qu'**un signal d'alarme optique et/ou acoustique est généré avant l'interruption de l'alimentation en énergie.

12. Unité de commande selon l'une des revendications précédentes, **caractérisée par** une interface (1a) pour l'enregistrement de logiciels pour l'unité de commande (1) et/ou un appareil ménager (2).

13. Unité de commande selon l'une des revendications précédentes, **caractérisée par** un capteur, en particulier un capteur IR (19a) exécuté afin de détecter des valeurs de mesure caractéristiques de la température d'un objet positionné sur un appareil électroménager (2), en particulier d'un récipient de préparation (25) positionné sur un champ de cuisson (2).

14. Unité de commande selon l'une des revendications précédentes, **caractérisée par** un dispositif d'alarme (19c) exécuté afin de détecter la fumée et/ou le feu.

15. Unité de commande selon l'une des revendications précédentes, **caractérisée par** un dispositif d'agenda électronique pour la saisie et l'émission d'informations, en particulier d'informations personnelles destinées aux utilisateurs de l'appareil électroménager (2) et/ou de l'unité de commande (1), et/ou pour l'appel d'instructions relatives à des travaux réalisables avec l'appareil électroménager (2).
